# EUROPEAN PATENT SPECIFICATION

(11) **EP 3 953 633 B1**
(45) Date of publication and mention of the grant of the patent: **20.09.2023**
(21) Application number: 20721684.7
(22) Date of filing: 09.04.2020
(51) Int. Cl.: F16L 41/08, F16L 41/00, F16L 5/10

(54) **SEALING ASSEMBLY**
DICHTUNGSANORDNUNG
ENSEMBLE D'ÉTANCHÉITÉ

(30) Priority: 11.04.2019 GB 201905161
(43) Date of publication of application: 16.02.2022
(73) Proprietor: Fernco Limited, Barnsley South Yorkshire S73 0UW (GB)
(72) Inventor: BEATSON, Ben, Swinton, Greater Manchester S64 8DD (GB)
(74) Representative: Wilson Gunn
(86) International application number: PCT/GB2020/050941
(87) International publication number: WO 2020/208373

(56) References cited:
- GB-A- 2 293 422
- US-A1- 2016 145 848

## Description

### Technical Field of the Invention

The present invention relates to an assembly for receiving pipes in openings formed in concrete structures, to a concrete structure comprising said assembly and to a method of inserting a pipe in one or more openings formed in the concrete structure.

### Background to the Invention

It is often necessary to connect lateral pipes to concrete structures such as manhole chambers or gullies for waste water and surface water. This is typically achieved by integrating an elastomeric component into apertures formed in the concrete structure in order to retain and seal against an inserted pipe.

As disclosed in US2016/0145848, the elastomeric component can be cast within the interior of an aperture formed in the concrete structure in which case the elastomeric component is arranged to abut the annular surface of the aperture. However, since the elastomeric component is arranged to abut the annular surface of the aperture there is an increased risk of fluid leaking from the pipe, especially when the fluid is flowing through the pipe under pressure. In another embodiment, US2016/0145848 discloses an arrangement in which the elastomeric component is disposed between an inner surface of the aperture and the adjacent outer surface of an inserted pipe.

US2001/0052675 discloses a sealing assembly for a lateral pipe which comprises a rigid component and an overlapping elastomeric component. In particular, the elastomeric component overlaps the ends of the rigid components so as to be cast into the concrete and also seals onto the inserted pipe. However, the elastomeric component is relatively complex and therefore difficult and expensive to manufacture. Moreover, due to the way in which the elastomeric component is arranged relative to the rigid component, the elastomeric component is placed under a high degree of stress which increases wear and could limit the lifespan of the elastomeric component. In addition, since the elastomeric component comprises anchor sections which extend radially outwards from the elastomeric component for permanently retaining the elastomeric component within the concrete structure, in the event the elastomeric component fails, it would be difficult and time consuming to replace the elastomeric component.

GB 2293422 A discloses a seal for joining two conduits together. The seal comprises a rubber member and a plastic member.

It is an object of embodiments of the present invention to provide an assembly that at least partly overcomes or alleviates the above problems.

### Summary of the Invention

According to a first aspect of the invention there is provided an assembly for receiving a lateral pipe in an opening formed in a concrete structure, the assembly comprising: an elastomeric sleeve configured to be removably insertable into the opening formed in the concrete structure, the elastomeric sleeve comprising at a first end an inwardly extending rib and at a second end an outwardly extending flange; and a rigid ring component insertable into the elastomeric sleeve comprising at a first end an inwardly extending rib and at a second end an outwardly extending flange.

The provision of the elastomeric sleeve around the outer surface of the rigid ring component creates a seal around the rigid ring component that enables improvements in sealing performance to be obtained. This is particularly the case where the respective ribs at the second ends are aligned and engage with an end of an inserted pipe. Moreover, the elastomeric sleeve has a relatively simple construction which enables it to be produced easily, quickly and at reduced cost. In addition, the provision of the outwardly extending flanges facilitates removal of the elastomeric sleeve and/or the rigid ring component from the opening by an operative when needed or desired, irrespective of whether the assembly has been cast in concrete or inserted into the opening after the concrete has cured. This in turn makes the assembly easier to maintain relative to some existing sealing assemblies.

The elastomeric sleeve may be free from formations for permanently anchoring the elastomeric sleeve to the concrete structure. This has the benefit that the assembly can be removed from the opening easily and with minimal force when needed or desired while minimising damage to the concrete structure. In such embodiments, the elastomeric sleeve may be frictionally secured within the opening of the concrete structure. For example, the outer surface of the elastomeric sleeve may comprise a fin, a radial edge and/or a bulge.

In further embodiments, the elastomeric sleeve may be cast into the concrete. This will securely affix the elastomeric sleeve into the concrete structure for transport and general use. It will also help retain the outer elastomeric sleeve from being removed from the structure if/when the rigid ring component or pipe is removed. The exterior surface of the elastomeric sleeve may be provided with formations operable to enable this retention when the concrete is cured. If necessary, in some embodiments, the formations may be severed to enable removal of the elastomeric sleeve from the concrete.

The elastomeric sleeve may be arranged to partially overlap a first end of the rigid ring component. Since the elastomeric sleeve does not extend fully around the first end of the rigid ring component, the elastomeric sleeve is placed under reduced levels of stress in use which extends the lifespan of the elastomeric sleeve and the assembly as a whole.

The rib at the first end of the elastomeric sleeve may define a limit of insertion of the rigid ring component. In some embodiments, the rib of the first end of the elastomeric sleeve may interact with the rib of the first end of the rigid ring component. In some such embodiments, the rib of the first end of the elastomeric sleeve may support the rigid ring component. In some such embodiments, the rib of the first end of the elastomeric sleeve may define a shelf for supporting the first end of the rigid ring component. The rib may also support an inserted pipe, e.g. after casting of the assembly in concrete and removal of the rigid ring component.

The first end of the elastomeric sleeve may be provided with an exterior bulge. The exterior bulge can help aid retention of the elastomeric sleeve within a concrete structure into which it is inserted. It can also aid the formation of a seal between the elastomeric sleeve and a concrete structure into which it is inserted. Another benefit is that the exterior bulge may aid the rib of the first end of the elastomeric sleeve in supporting the first end of the rigid ring component. This is due to the rib of the first end of the elastomeric sleeve being urged inward by the interaction between the exterior bulge and the concrete structure into which the elastomeric sleeve is inserted.

The elastomeric sleeve may be formed from any suitable material including but not limited to: EPDM (ethylene propylene diene monomer), Silicone, PVC (polyvinylchloride), polyurethane, NBR (nitrile butadiene rubber), SBR (styrene butadiene rubber), Butyl Rubber or the like.

The rigid ring component may be retained within the elastomeric sleeve by friction. This enables the rigid ring component to be held in position during use but also allows an operative to remove the rigid ring component as needed. The rigid ring component may be arranged to extend beyond the elastomeric sleeve to define a gap between the respective flanges of the elastomeric sleeve and rigid ring component. This helps facilitate removal of the rigid ring component from the interior of the elastomeric sleeve.

In one embodiment, the elastomeric sleeve may comprise one or more inwardly projecting formations for retaining the rigid ring component within the elastomeric sleeve. For instance, the inwardly projecting formations may comprise one or more annular ribs.

In some embodiments, the assembly may comprise a spacer. The provision of a spacer extends the depth of the seal which allows the assembly to be used in a greater variety of concrete structures where the depth of the openings may be different. The provision of a spacer fills any gaps that may be present between the assembly and concrete body. The helps prevent against potential silt accumulation and also helps to ensure that there a smooth transition between the concrete structure and the connecting body, e.g. a lateral pipe.

The spacer may be formed from an elastomeric material or a rigid material as required. The spacer may comprise a ring element. The spacer may be configured to engage with a base provided at the first end of the elastomeric sleeve. In some embodiments, an abutting surface of the spacer and the base may be provided with substantially reciprocating features. For instance, the abutting surface of the spacer may comprise a circular groove and the base may comprise a corresponding circular press-fit connection detail. In some embodiments the abutting surface of the spacer and the base may be held together through frictional engagement. In some embodiments, a distal surface of the spacer, opposite the abutting surface, may comprise a groove. The groove may have a substantially U-shaped cross-section.

The assembly may comprise bushing means. This facilitates secure insertion of different sized pipes. The bushing means may be adapted to fit within the rigid ring component or within the elastomeric sleeve with or without the rigid ring component. The bushing means is preferably formed from an elastomeric or other deformable material. The bushing means may be retained within the interior of the rigid ring component by friction. In some embodiments, the interior surface of the rigid ring component may be provided with elements for cooperating with corresponding elements on the bushing means. In some embodiments, the bushing means may be invertible. This can increase the range of different pipe diameters that can be compensated for using a single bushing means.

The assembly may comprise secondary bushing means adapted to fit within the interior of the bushing means. The secondary bushing means may be retained within the interior of the bushing means by friction. In certain embodiments the interior surface of the bushing means may be provided with features for cooperating with corresponding features on the secondary bushing means. The provision of secondary bushing means facilitates sealing with a greater range of exterior pipe diameters. In some embodiments, the secondary bushing means may be invertible.

The elastomeric sleeve may comprise an interior shoulder. The interior shoulder may define a support shelf. The interior shoulder may support a second end of the rigid ring component. Additionally or alternatively, the interior shoulder may support any other inserted object such as a pipe or bushing means. The interior shoulder may be provided at or towards the second end of the elastomeric sleeve.

The rigid ring component may comprise an interior shoulder. The interior shoulder may define a support shelf. The interior shoulder may support any inserted object such as a pipe or bushing means. The interior shoulder may be provided at or towards the second end of the rigid ring component.

The interior shoulder of the rigid ring component may match the profile of the interior shoulder of the elastomeric sleeve. This can facilitate use of the bushing means directly with the elastomeric sleeve to retain an inserted pipe. This can enable the retention of larger diameter inserted pipes where appropriate.

According to a second aspect of the invention there is provided an assembly for receiving a lateral pipe in an opening formed in a concrete structure, the assembly comprising an elastomeric sleeve configured to be removably insertable into the opening formed in the concrete structure, the elastomeric sleeve comprising at a first end an inwardly extending rib, at a second end an outwardly extending flange, and further comprising an interior shoulder for supporting an inserted object.

The assembly of the second aspect of the present invention may include any or all aspects of the assembly of the first aspect of the present invention, as desired or as appropriate.

In particular, assemblies according to the second aspect of the present invention may be adapted to be directly fitted with a pipe or to directly accommodate bushing means for direct fitting to a pipe without the use of a rigid ring component.

According to a third aspect of the invention there is provided a method of inserting a pipe into an opening in a concrete structure, the method comprising the step of integrating an assembly according to the first or second aspects of the invention into the opening and inserting the pipe into the assembly.

The method according to the third aspect of the invention makes use of an assembly according to the first or second aspects of the invention and may, as appropriate, incorporate any or all features discussed above in relation to the assembly according to the first or second aspects of the invention.

The method may comprise the steps of drilling the concrete structure to form an opening, pushing the assembly into the opening and inserting the pipe into the assembly. A diamond core drill may be used to form the opening in the concrete structure at the desired position.

In some embodiments the method may comprise the step of casting the assembly in the concrete structure. In particular, the elastomeric sleeve may be cast in concrete. In suitable embodiments, the elastomeric sleeve and the rigid ring component may be cast in concrete. In further suitable embodiments the elastomeric sleeve, the rigid ring component and the bushing means may be cast in concrete. In other suitable embodiments the elastomeric sleeve, the rigid ring component, the bushing means and secondary bushing means may be cast in concrete. In some such embodiments, the elastomeric sleeve, the rigid ring component and the bushing means, if present, are removable after the cast concrete has set.

The method may comprise the step of fitting the spacer to the elastomeric sleeve and then integrating the assembly and spacer into the opening in the concrete structure. Accordingly, the assembly comprising the spacer may be either pushed into the opening or may be cast in concrete.

In some embodiments, following integration of the assembly into the opening in the concrete structure, the method may comprise the step of inserting the rigid ring component into the elastomeric sleeve. In other embodiments, following integration of the assembly into the opening in the concrete structure, the method may comprise the step of inserting the bushing means into the rigid ring component of the assembly or directly int the elastomeric sleeve of the assembly. In some such embodiments, the method may also comprise the subsequent step of inserting secondary bushing means into the bushing means.

According to a fourth aspect of the invention there is provided a concrete structure comprising an opening for receiving a pipe, wherein an assembly according to the first or second aspects of the invention is integrated within said opening.

Since an assembly according to the first or second aspects of the invention is positioned within the opening in the concrete structure according to the fourth aspect of the invention, the concrete structure according to the fourth aspect of the invention may, as appropriate incorporate any or all features discussed above in relation to the assembly according to the first or second aspects of the invention.

The assembly according to the first or second aspects of the invention may be integrated into the concrete structure by the method of the third aspect of the invention. As such, the concrete structure of the fourth aspect of the present invention may incorporate any or all features of the third aspect of the present invention.

The concrete structure may be a concrete chamber, junction or gully for receiving wastewater and/or surface water. The concrete structure may be a reinforced concrete structure.

### Detailed Description of the Invention

In order that the invention may be more clearly understood one or more embodiments thereof will now be described, by way of example only, with reference to the accompanying drawings, of which:
- Figure 1: shows a perspective view of an embodiment of the assembly;
- Figure 2: shows a cross-sectional view of the assembly shown in Figure 1;
- Figure 3: shows an exploded view of the elastomeric sleeve, the rigid ring component and spacer of the assembly shown in figure 1;
- Figure 4: shows an exploded view of the insertable bushing means relative to the assembly of figure 1;
- Figure 5: shows an exploded view of an alternative embodiment of an elastomeric sleeve and spacer;
- Figure 6: shows the assembly of figure 1 fitted around a lateral casting connection mandrel;
- Figure 7: shows a cross-sectional view of a pipe inserted into the assembly of figure 1 within an opening formed in concrete;
- Figure 8: shows an enlarged view of the pipe inserted into the assembly of figure 1 within an opening formed in concrete;
- Figure 9: shows a perspective view of another embodiment of the assembly;
- Figure 10: shows a cross-sectional view of the assembly shown in Figure 9;
- Figure 11: shows an exploded view of the elastomeric sleeve and rigid ring component of the assembly shown in figure 9;
- Figure 12: shows an exploded view of the insertable bushing means relative to the assembly of figure 9;
- Figure 13: shows a perspective sectional view of a further embodiment of the assembly;
- Figure 14: shows a cross-sectional view of the assembly shown in Figure 13;
- Figure 15: shows an exploded view of a still further embodiment of the assembly;
- Figure 16: shows a cross-sectional view of the assembly shown in Figure 15; and
- Figure 17: shows a perspective sectional view of an inverted bushing means used with an elastomeric sleeve of the assembly of figure 1; and
- Figure 18: shows a cross-sectional view of the inverted bushing means inserted into the elastomeric sleeve of figure 17.

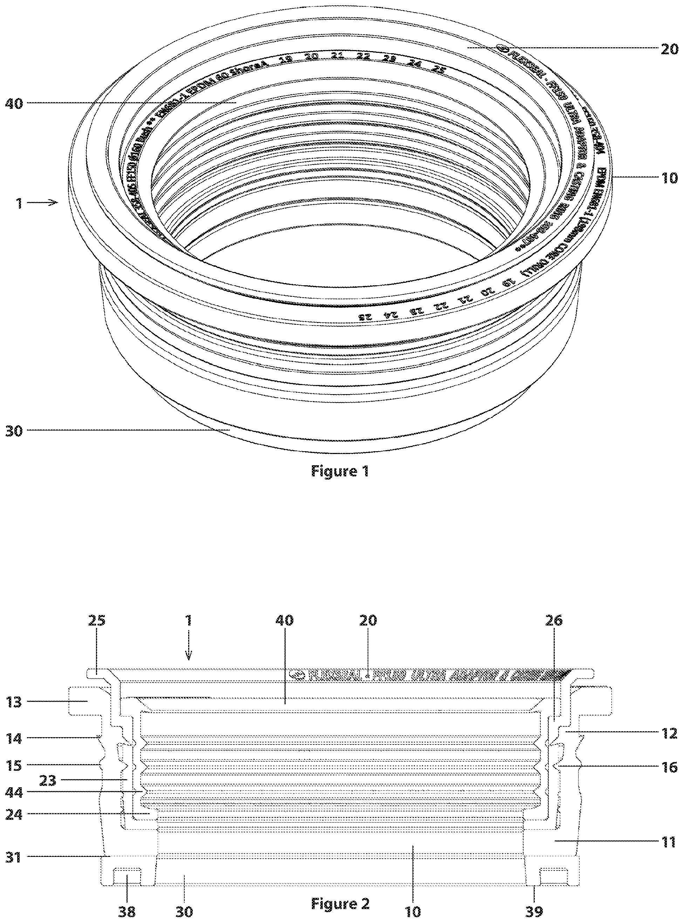

Figure 1 shows an assembly 1 according to the present invention. The assembly 1 comprises an elastomeric sleeve 10 and a rigid ring component 20.

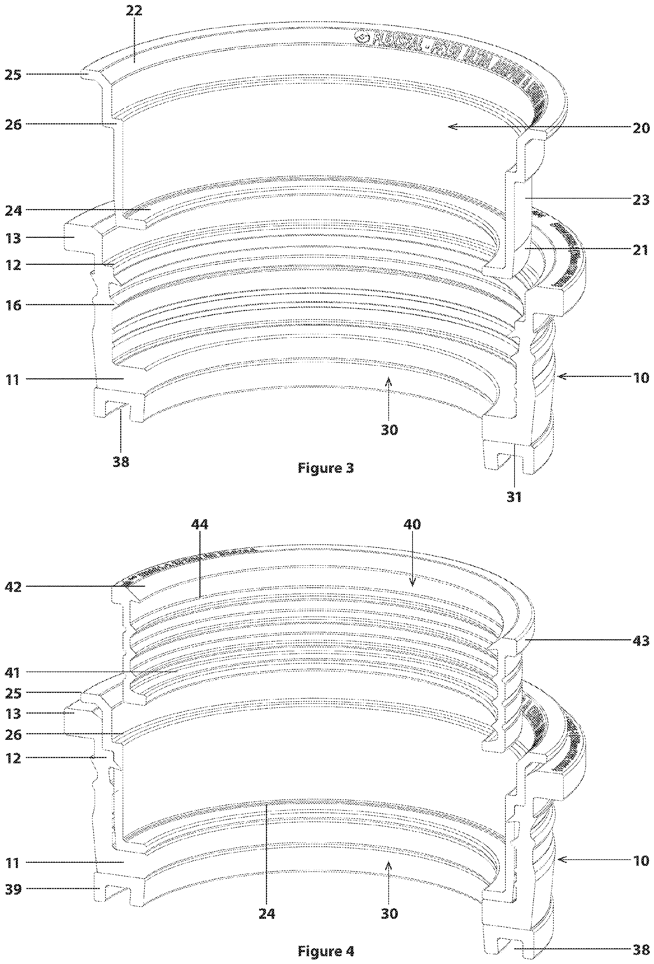

The rigid ring component 20 has a first end 21, a second end 22 and a substantially tubular wall 23 extending therebetween. The first end 21 of the rigid ring component 20 comprises an inwardly projecting rib 24 while the second end 22 comprises an outwardly projecting flange 25. As best shown in Figures 2 and 3, the tubular wall 23 also comprises an interior shoulder 26. In this embodiment the rigid ring component 20 is formed from plastic.

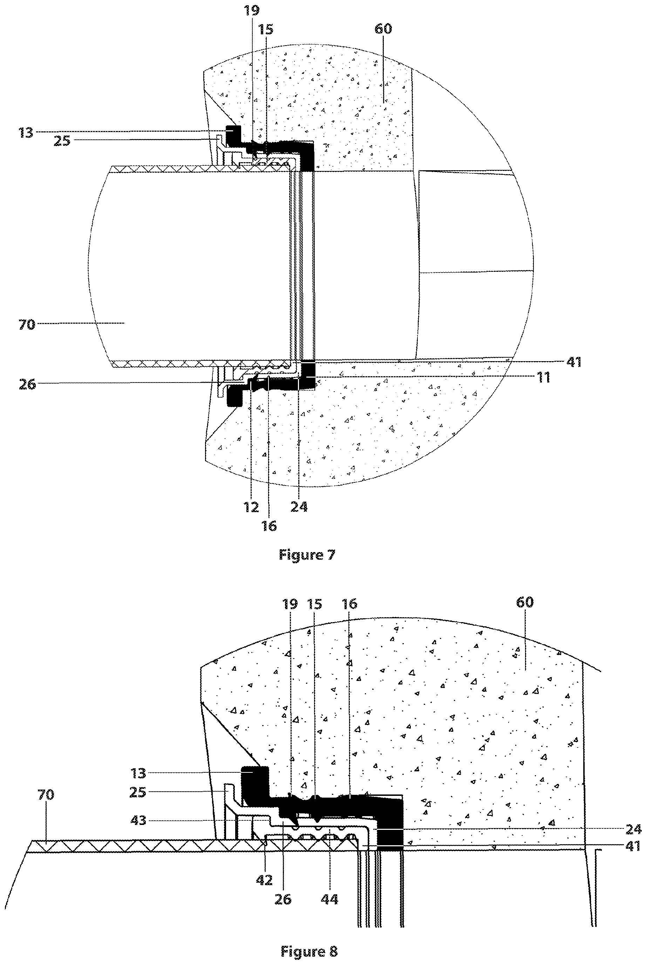

The elastomeric sleeve 10 is adapted to receive and fit around the rigid ring component 20. In particular, the elastomeric sleeve 10 is provided with a first inwardly extending rib 11 which is adapted to overlap and support the inwardly projecting rib 24 of the rigid ring component 20 in use. As best shown in Figures 2 and 3, the elastomeric sleeve comprises an interior shoulder 12 which is adapted to provide further support to the rigid ring component 20 in the region of the interior shoulder 26. The elastomeric sleeve 10 additionally comprises an outwardly extending flange 13 which is adapted to abut the outer surface of the concrete structure 80. The outer surface of the elastomeric sleeve 10 comprises a fin 14 and a bulge 15 to help retain the elastomeric sleeve 10 within the opening of the concrete structure in use. The fin 14 and bulge 15 are configured to allow the elastomeric sleeve to be removably inserted into the opening in the concrete structure 80 (Figure 8).

The elastomeric sleeve 10 is also provided with axially spaced gripping formations 16 which extend inwardly from the inner surface of the elastomeric sleeve 10. The gripping formations 16 are provided between the rib 11 and shoulder 12 and are adapted to retain the rigid ring component 20 within the interior of the elastomeric sleeve 10 through friction. The elastomeric sleeve 10 is formed from an elastomeric material such as nitrile butadiene rubber (NBR), although other suitable elastomeric or deformable materials could also be used.

In the embodiment shown in figures 1-4, the assembly 1 additionally comprises a removable spacer 30. The spacer 30 has a generally annular profile, the diameter of the through passage in the elastomeric sleeve 10 and the diameter of the through passage in the spacer 30 being substantially the same. A base surface of the elastomeric sleeve 10 interacts with an abutting surface 31 of the spacer 30. The distal surface 39 of the spacer 30 may be provided with a U-shaped groove 38. This can help the spacer 30 engage with a surrounding structure.

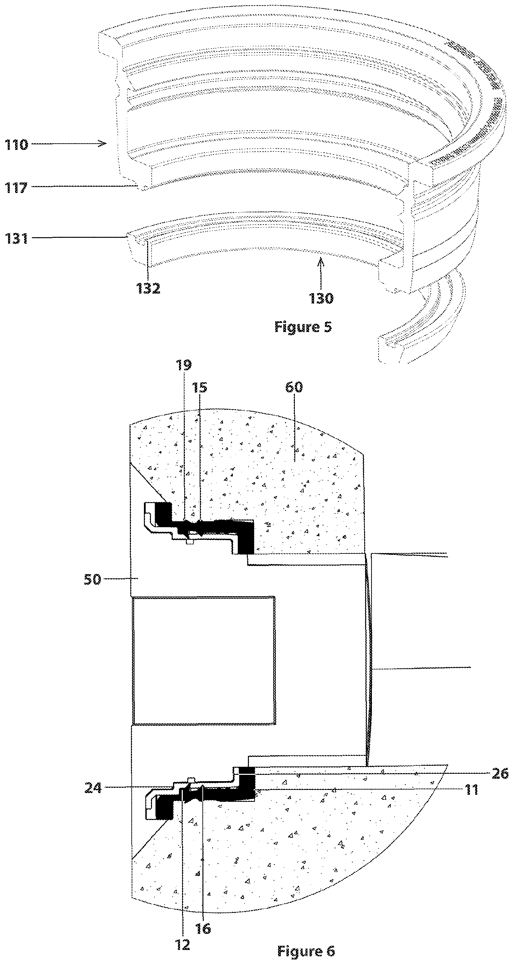

An alternative embodiment of the elastomeric sleeve 110 and spacer 130 is shown in figure 5. In this embodiment, the elastomeric sleeve 110 and spacer 130 differ from those shown in figures 1-4 by the abutting surface 131 of the spacer 130 and the provision of a corresponding connection element 117 on the elastomeric sleeve 110. In particular, the abutting surface 131 comprises a groove (female part) 132 which is adapted to receive a corresponding press-fit connection element 117 (male part) which extends downwardly from the base of the elastomeric sleeve 110 and has outwardly tapering side walls. Once the press-fit connection element 17 is deformably inserted into the groove 132 the outwardly tapering side walls act to secure the press-fit connection element 117 within the groove 132. This can provide a more secure connection between the elastomeric sleeve 110 and the spacer 130.

In order to accommodate different sized pipes the assembly may be provided with bushing means 40. The bushing means 40 comprises a substantially tubular body formed from an elastomeric material such as nitrile butadiene rubber (NBR). The bushing means 40 is adapted to be removably insertable into the rigid ring component 20. In particular, the bushing means 40 comprises an inwardly projecting rib 41 at a first end and an outwardly projecting flange 43 and inwardly projecting rib 42 at a second end. The rib 41 and the flange 43 are adapted to rest on the rib 24 and the shoulder 26 of the rigid ring component 20 respectively. As best shown in Figures 2 and 4, the inwardly projecting rib 42 is sloped to facilitate pipe insertion into the bushing means 40. Figure 4 additionally shows that the inner surface of the bushing means is provided with a plurality of axially spaced protrusions 44 which help secure the pipe 200 within the interior of the bushing means 40.

Depending on the outer diameter of the pipe 200, the assembly can also comprise a secondary bushing means (not shown) which is configured to be removably insertable into the interior of the bushing means 40. The outer surface of the secondary bushing means comprises a plurality of axially spaced recesses which are arranged to engage with the protrusions 44 to frictionally secure the secondary bushing means within the interior of the bushing means 40. The inner surface of the secondary bushing means comprises a plurality of axially spaced protuberances for securing the pipe 200 within the interior of the secondary bushing means in use.

In use, and in one embodiment of the invention, an opening is formed in the concrete structure 60 using a suitable tool, e.g. a core drill. The elastomeric sleeve 10 is then inserted into the opening until the outwardly extending flange 13 abuts the outer surface of the concrete structure 60. The rigid ring component 20 is then inserted into the elastomeric sleeve 10 with insertion being halted when the rib 24 contacts the rib 11. As best shown in Figures 2 and 8, the second end 22 of the rigid ring component 20 comprising the flange 25 extends beyond the flange 13 of the elastomeric sleeve 10. The provision of a gap between the flange 25 and the flange 13 facilitates removal of the rigid ring component from the elastomeric sleeve 20 when needed or desired.

The gripping formations 16 which extend inwardly from the inner surface of the elastomeric sleeve 10 help retain the rigid ring component 20 in position within the interior of the elastomeric sleeve 10. Then, the bushing means 40 is inserted within the interior of the rigid ring component 20 until the rib 41 and the outwardly projecting flange 43 respectively abut the rib 24 and shoulder 26 of the rigid ring component 20.

With the rigid ring component 20 secured within the interior of the elastomeric sleeve 10, and the bushing means 40 secured within the interior of the rigid ring component 20, an appropriately sized lateral pipe 70 is then inserted into the rigid ring component 20 until it abuts the rib 41 of the bushing means 40.

It will be appreciated that in other embodiments larger diameter pipes 70 can be inserted directly into the rigid ring component 20 (without bushing means), in which case the pipe 70 will abut the rib 24 of the rigid ring component 20.

In alternative embodiments the elastomeric sleeve 10, the rigid ring component 20, the bushing means 40 (if present) and secondary bushing means (if present) are inserted into the opening of the concrete structure as a complete unit. In such cases the flat face of the flange 25 of the rigid ring component 20 can be used to drive the assembly 1 into the opening. Moreover, the provision of shelf 12 allows the force applied to the rigid ring component 20 to be transposed onto the body of the elastomeric sleeve 10 which in turn helps to ensure uniform insertion of the complete assembly 1 into the opening. Once the complete assembly 1 is secured within the opening of the concrete structure 60, the pipe 70 can be inserted into the rigid ring component 20, the bushing means 40 (if present) or secondary bushing means (if present).

In another embodiment of the invention the elastomeric sleeve 10 and the rigid ring component 20 are pre-cast into concrete 60. This comprises the step of inserting the rigid ring component 20 into the elastomeric sleeve 10 so that the rib 24 abuts and overlaps the rib 11 of the elastomeric sleeve 10. The rigid ring component 20 acts a reinforcing collar during casting but can be removed after the concrete has set to accommodate lateral pipes 70 with greater outer diameters. With the rigid ring component 20 frictionally secured within the interior of the elastomeric sleeve 10, the elastomeric sleeve 10 and the rigid ring component 20 are fitted around the end of a mandrel 50 which is adapted to form an opening of a desired size in a concrete structure 100. The mandrel is then placed in a mould and concrete is poured around the mandrel 50 and the assembly 1 comprising the elastomeric sleeve 10 and rigid ring component 20. Once the concrete has cured, the mandrel 50 is removed from the mould to leave behind a concrete structure 60 with the assembly 1 integrated into the opening thus formed. As best shown in Figure 8, the fin 19 and bulge 15 project into the concrete structure 100 to help retain, but not permanently secure, the elastomeric sleeve 10 in the opening. If needed, bushing means 40 can be inserted into the rigid ring component 20 and pre-cast in concrete together with the elastomeric sleeve 10 and the rigid ring component 20. Alternatively, the bushing means can be removably inserted into the rigid ring component 20 once the concrete has set and the mandrel has been removed.

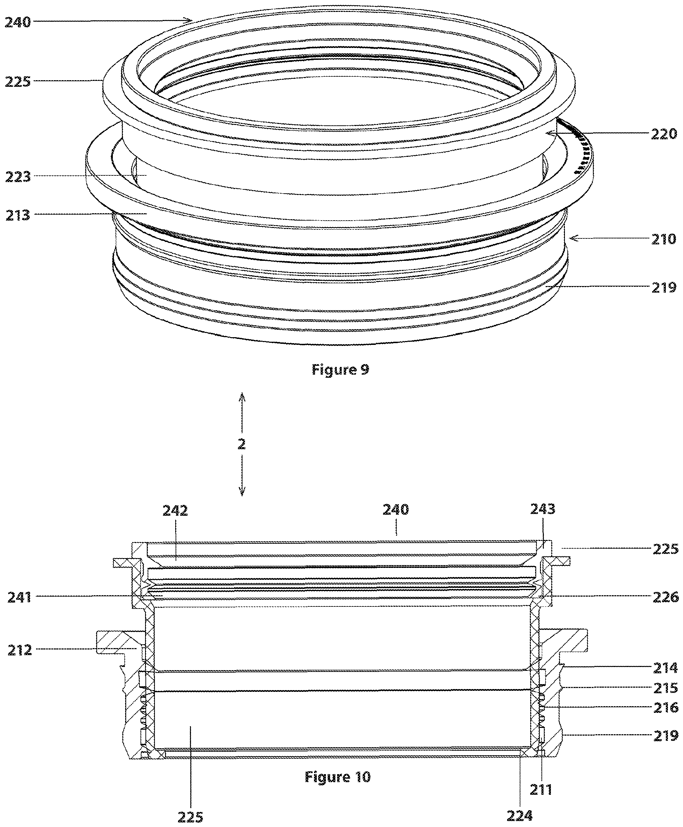

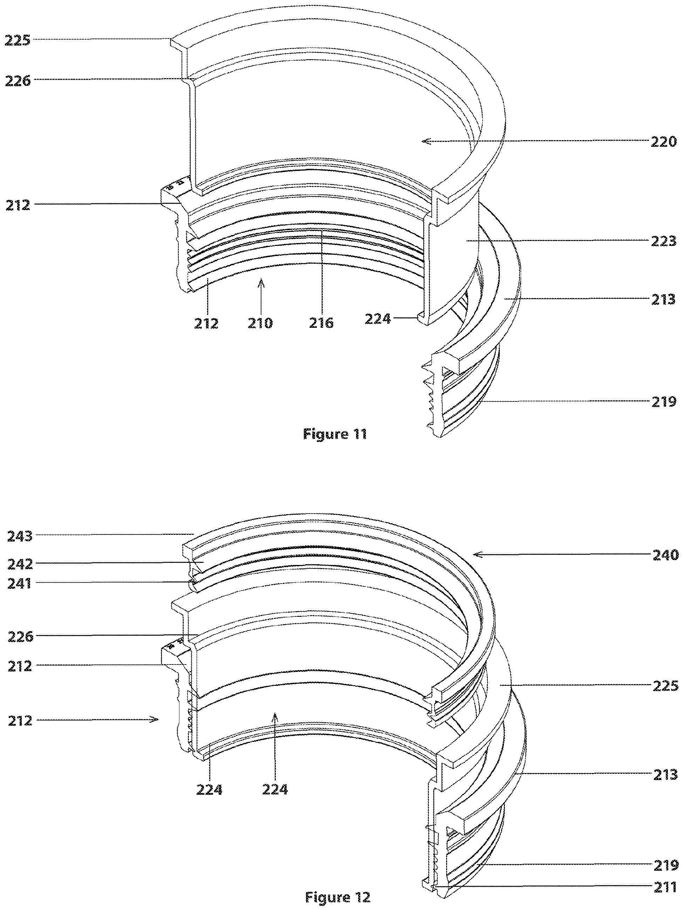

Turning now to figures 9-12 another embodiment of an assembly 2 according to the present invention is shown. The assembly 2, is particularly suited to larger diameter pipes and/or to pipes which project entirely through the assembly 2. The assembly 2 comprises an elastomeric sleeve 210 and a rigid ring component 220 plus an optional bushing means 240. The elastomeric sleeve 210, rigid ring component 220 and bushing means 240 are substantially similar to the elastomeric sleeve 10, rigid ring component 20 and bushing means 40 of assembly 1, with the exception of the specific features described below. As such, corresponding features to those in assembly 1 are labelled with corresponding reference numerals and only features that differ significantly from those in assembly 1 are described in detail.

The first end of the assembly 2 differs from the assembly 1 in that the rib 211 of elastomeric sleeve 210 does not overlap the rib 224 of the rigid ring component 220. Instead the rib 211 supports the outer surface of the rigid ring component 220. The rib 224 is also relatively small. This ensures that the rib 224 is adequately able to resist shear forces applied by an inserted pipe, in use. The rib 211 is still sufficient to urge the rigid ring component 220 inward and to prevent concrete penetrating between the rigid ring component 220 and elastomeric sleeve 210 when cast in place. As is shown in the figure, an exterior bulge 219 may be provided at the second end of the elastomeric sleeve 210 to further improve sealing between the elastomeric sleeve 210 and a structure into which it is inserted. The bulge 219 may additionally help urge the rib 211 inward, improving sealing with the rigid ring component 220 and aiding retention of any inserted pipe.

The second end of the assembly 2 differs from the assembly 1 in that the second end 222 of the rigid ring component 220 projects further proud of the shoulder 212 of elastomeric sleeve 210. This is achieved by the axial extension of tubular wall 223. Additionally, the shoulder 212 may be provided with a bevelled profile, thereby aiding insertion of the rigid ring element 210.

The bushing means 240 is also adapted to have a lesser axial extent, such that the rib 241 abuts shoulder 226 rather than rib 224. The rib 242 may also be displaced axially from the flange 243 as shown in the figures. Whilst the flange 243 still abuts flange 225, this results in bushing means 240 acting primarily as a seal than as compensation for differences in pipe diameter.

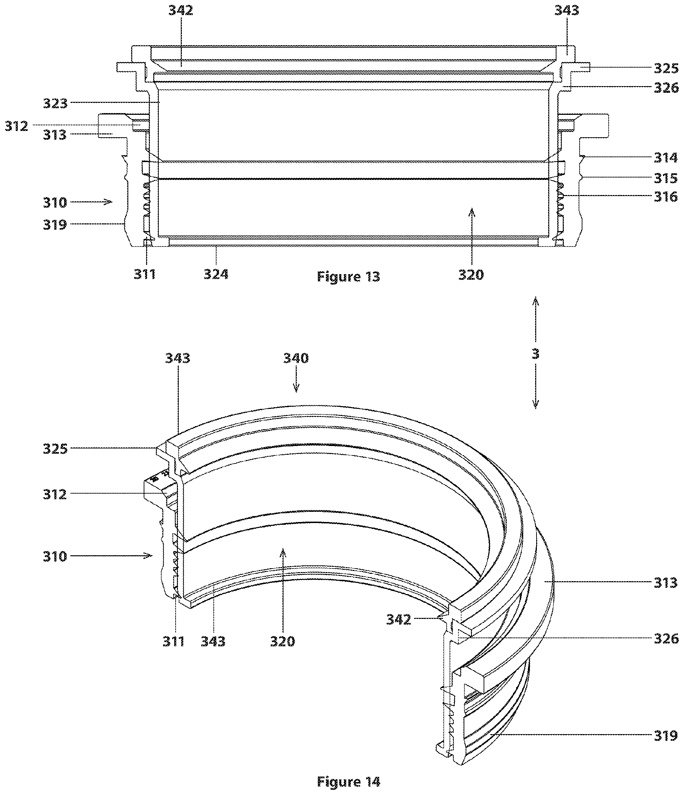

A further alternative embodiment of the assembly 3 is shown in figures 13 and 14. The assembly 3 comprises an elastomeric sleeve 310 and a rigid ring component 320 plus an optional bushing means 340. The elastomeric sleeve 310, rigid ring component 320 and bushing means 340 are substantially similar to the elastomeric sleeve 10, rigid ring component 20 and bushing means 40 of assembly 1 and/or the elastomeric sleeve 210, rigid ring component 220 and bushing means 240 of assembly 2, with the exception of the specific features described below. As such, corresponding features to those in assembly 1 or assembly 2 are labelled with corresponding reference numerals and only features that differ significantly from those in assembly 1 or assembly 2 are described in detail.

In particular, assembly 3 differs from assembly 2 in that there is a smaller axial separation between shoulder 326 and flange 325 of the rigid ring component 320 that the equivalents in assembly 2. This facilitates use of a bushing means 340, which is smaller still than the bushing means 240 in assembly 2 and omits a lower rib.

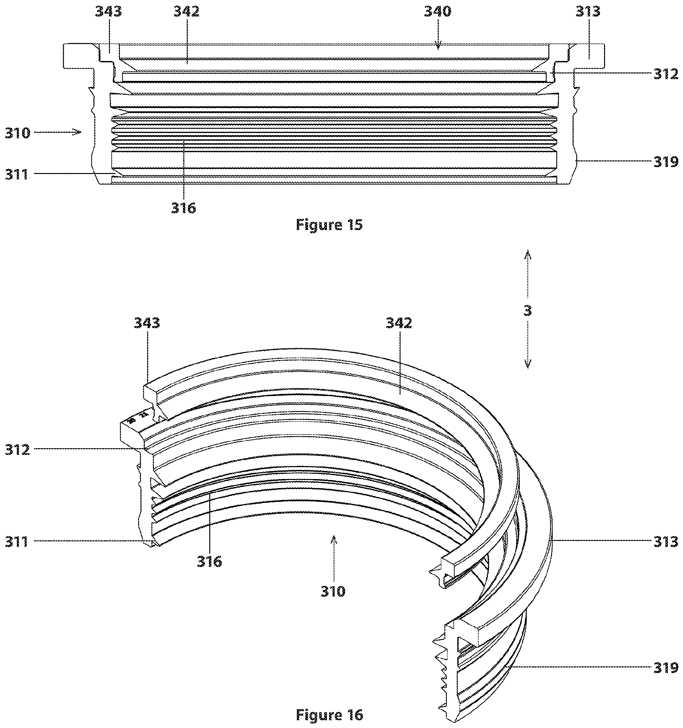

A further feature of assembly 3 is that the profile of shoulder 312 of the elastomeric sleeve 310 and the profile of shoulder 326 of the rigid ring component 320 is matched. This can facilitate use of the assembly 3 without the rigid ring component 320. In such instances, the bushing means 340 may directly abut the shoulder 312 of the elastomeric sleeve 310. This is illustrated in figures 15 and 16. Accordingly, this can facilitate the use of assembly 3 with a larger diameter pipe. In such instances, the gripping formations 316 act to retain the pipe within the elastomeric sleeve 310. Similarly, the rib 311 can act to support and/or form a seal around the end of the inserted pipe.

Whilst assembly 2 and assembly 3 are shown without the provision of an equivalent to spacer 30, 130, the skilled man will appreciate that an equivalent component can be provided if required.

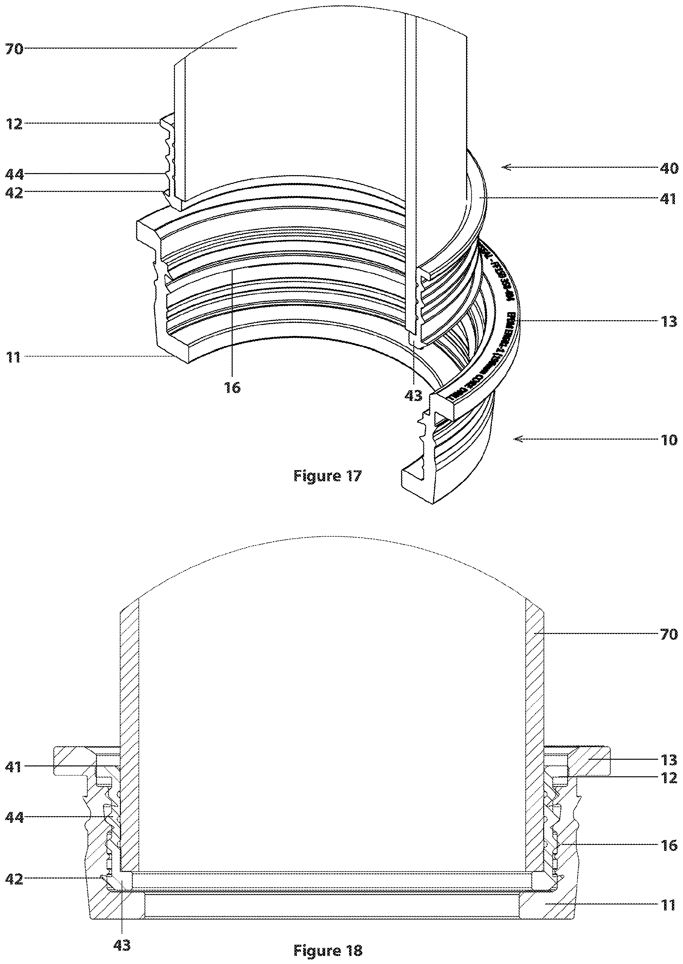

The skilled man will further appreciate that the elastomeric sleeve 10 of assembly 1 may also be utilised without the rigid ring component 20 where appropriate. For example, this may be achieved by directly inserting a pipe into the elastomeric sleeve 10 or by inserting a pipe fitted with a suitable bushing means into the elastomeric sleeve 10. In one particular example, bushing means 40 may be inverted, fitted to the end of a pipe 70 and inserted into the elastomeric sleeve 10, as illustrated in figures 17 & 18. This provides another way to compensate for pipes 70 with different outer diameters.

Turning now to figure 17, bushing means 40 has been inverted and pushed over the end of pipe 70. As can be seen, the protrusions 44 are now provided in the exterior of the busing means and the rib 41 now projects outwardly. The flange 43 now projects inwardly and fits around the end of pipe 70.

Subsequently, the pipe 70 fitted with bushing means 40 is inserted into elastomeric sleeve 10 as shown at figure 18. Upon insertion, interaction between rib 42 and protrusions 44 of the bushing means 40 and the interior surface of elastomeric sleeve 10, in particular gripping formations 16 secure the pipe 70 in position and provide a seal around the end of the pipe 70. The flange 43 is supported by and forms a seal against rib 11. The rib 11 may also support the pipe 70, providing a barrier against over insertion.

Additionally, the rib 41 of bushing means 40 may interact with shoulder 12 of elastomeric sleeve 10 to limit over insertion of pipe 70.

The one or more embodiments are described above by way of example only. Many variations are possible without departing from the scope of protection afforded by the appended claims.

## Claims

1. An assembly (1) for receiving a lateral pipe (70) in an opening formed in a concrete structure (80), the assembly (1) comprising: an elastomeric sleeve (10) configured to be removably insertable into the opening formed in the concrete structure (80), the elastomeric sleeve comprising at a first end an inwardly extending rib (11) and at a second end an outwardly extending flange (13); and a rigid ring component (20) insertable into the elastomeric sleeve (10) comprising at a first end (21) an inwardly extending rib (24)
**characterised in that** the rigid ring component (20) further comprises at a second end (22) an outwardly extending flange (25).

2. An assembly (1) according to claim 1, wherein the elastomeric sleeve (10) is arranged to partially overlap a first end (21) of the rigid ring component (20).

3. An assembly (1) according to any preceding claim, wherein the rib (11) of the first end of the elastomeric sleeve (10) supports the rigid ring component (20) or an inserted pipe (70).

4. An assembly (1) according to any preceding claim, wherein the first end of the elastomeric sleeve (10) is provided with an exterior bulge (15).

5. An assembly (1) according to any preceding claim, wherein the elastomeric sleeve (10) comprises one or more inwardly projecting formations (16) for retaining the rigid ring component (20) within the elastomeric sleeve (10).

6. An assembly (1) according to any preceding claim, wherein the assembly (1) comprises a spacer (30), optionally wherein the spacer (30) is configured to engage with a base provided at the first end of the elastomeric sleeve (10).

7. An assembly (1) according to any preceding claim, wherein the assembly (1) comprises bushing means (40) adapted to fit within the interior of the rigid ring component (20) or the elastomeric sleeve (10), optionally wherein the interior surface of the rigid ring component (20) or the elastomeric sleeve (10) is provided with elements for cooperating with corresponding elements on the bushing means (40).

8. An assembly (1) according to claim 7, wherein the assembly (1) comprises secondary bushing means adapted to fit within the interior of the bushing means (40).

9. An assembly (1) according to any preceding claim, wherein the elastomeric sleeve (10) comprises an interior shoulder (12) operable to support the second end (22) of the rigid ring component (20), a pipe (70) or bushing means (40), optionally wherein the interior shoulder (12) of the elastomeric sleeve (10) is provided at or towards the second end of the elastomeric sleeve (10).

10. An assembly (1) according to any preceding claim, wherein the rigid ring component (20) comprises an interior shoulder (26) operable to support a pipe (70) or bushing means (40), optionally wherein the interior shoulder (26) of the rigid ring component (20) is provided at or towards the second end (22) of the rigid ring component (20).

11. An assembly (1) according to claim 10 when dependent upon claim 9, wherein the profile of the interior shoulder (26) of the rigid ring component (20) matches the profile of the interior shoulder (12) of the elastomeric sleeve (10).

12. A method of inserting a pipe (70) into an opening in a concrete structure (80), the method comprising the step of integrating the assembly (1) according to any preceding claim into the opening and inserting the pipe (70) into the assembly (1), optionally comprising the step of casting the assembly (1) in an opening of the concrete structure (80) and then inserting the pipe (70) into opening through the assembly (1).

13. A method according to claim 12, wherein the method comprises the step of drilling the concrete structure (80) to form the opening, pushing the assembly (1) into the opening and inserting the pipe (70) into the assembly (1).

14. A method according to either of claim 12 or 13, wherein the method comprises the step of fitting a spacer (30) to the elastomeric sleeve (10) prior to the step of integrating the assembly (1) into the opening in the concrete structure (80), and optionally the steps of inserting bushing means (40) into the rigid ring component (20) of the assembly (1) or into the elastomeric sleeve (10) of the assembly (1), and inserting secondary bushing means into the bushing means (40).

15. A concrete structure (80) comprising an opening for receiving a pipe (70), wherein an assembly (1) according to any of claims 1 to 11 is integrated within said opening.

## Patentansprüche

1. Anordnung (1) zur Aufnahme eines seitlichen Rohrs (70) in einer Öffnung, die in einer Betonstruktur (80) gebildet ist, wobei die Anordnung (1) umfasst: eine Elastomerhülse (10), die dazu konfiguriert ist, abnehmbar in die Öffnung einsetzbar zu sein, die in der Betonstruktur (80) gebildet ist, wobei die Elastomerhülse an einem ersten Ende eine sich einwärts erstreckende Rippe (11) umfasst, und an einem zweiten Ende einen sich auswärts erstreckenden Flansch (13); und eine starre Ringkomponente (20), die in die Elastomerhülse (10) einsetzbar ist, umfassend an einem ersten Ende (21) eine sich einwärts erstreckende Rippe (24), **dadurch gekennzeichnet, dass** die starre Ringkomponente (20) ferner an einem zweiten Ende (22) einen sich auswärts erstreckenden Flansch (25) umfasst.

2. Anordnung (1) nach Anspruch 1, wobei die Elastomerhülse (10) dazu ausgelegt ist, ein erstes Ende (21) der starren Ringkomponente (20) teilweise zu überlappen.

3. Anordnung (1) nach einem der vorhergehenden Ansprüche, wobei die Rippe (11) des ersten Endes der Elastomerhülse (10) die starre Ringkomponente (20) oder ein eingesetztes Rohr (70) stützt.

4. Anordnung (1) nach einem der vorhergehenden Ansprüche, wobei das erste Ende der Elastomerhülse (10) mit einer äußeren Ausbauchung (15) versehen ist.

5. Anordnung (1) nach einem der vorhergehenden Ansprüche, wobei die Elastomerhülse (10) ein oder mehr einwärts vorstehende Gebilde (16) zum Halten der starren Ringkomponente (20) innerhalb der Elastomerhülse (10) umfasst.

6. Anordnung (1) nach einem der vorhergehenden Ansprüche, wobei die Anordnung (1) einen Abstandshalter (30) umfasst, wobei der Abstandshalter (30) optional dazu konfiguriert ist, an einer Basis anzugreifen, die an dem ersten Ende der Elastomerhülse (10) vorgesehen ist.

7. Anordnung (1) nach einem der vorhergehenden Ansprüche, wobei die Anordnung (1) Buchsenmittel (40) umfasst, die dazu ausgelegt sind, in das Innere der starren Ringkomponente (20) oder die Elastomerhülse (10) zu passen, wobei optional die Innenoberfläche der starren Ringkomponente (20) oder die Elastomerhülse (10) mit Elementen zur Zusammenwirkung mit entsprechenden Elementen an den Buchsenmitteln (40) versehen ist.

8. Anordnung (1) nach Anspruch 7, wobei die Anordnung (1) sekundäre Buchsenmittel umfasst, die dazu ausgelegt sind, in das Innere der Buchsenmittel (40) zu passen.

9. Anordnung (1) nach einem der vorhergehenden Ansprüche, wobei die Elastomerhülse (10) eine Innenschulter (12) umfasst, die betriebsmäßig das zweite Ende (22) der starren Ringkomponente (20), ein Rohr (70) oder Buchsenmittel (40) stützt, wobei optional die Innenschulter (12) der Elastomerhülse (10) an oder in der Nähe des zweiten Endes der Elastomerhülse (10) vorgesehen ist.

10. Anordnung (1) nach einem der vorhergehenden Ansprüche, wobei die starre Ringkomponente (20) eine Innenschulter (26) umfasst, die betriebsmäßig ein Rohr (70) oder Buchsenmittel (40) stützt, wobei optional die Innenschulter (26) der starren Ringkomponente (20) an oder in der Nähe des zweiten Endes (22) der starren Ringkomponente (20) vorgesehen ist.

11. Anordnung (1) nach Anspruch 10 in Abhängigkeit von Anspruch 9, wobei das Profil der Innenschulter (26) der starren Ringkomponente (20) zu dem Profil der Innenschulter (12) der Elastomerhülse (10) passt.

12. Verfahren zum Einsetzen eines Rohrs (70) in eine Öffnung in einer Betonstruktur (80), wobei das Verfahren den Schritt des Integrierens der Anordnung (1) nach einem der vorhergehenden Ansprüche in die Öffnung und des Einsetzens des Rohrs (70) in die Anordnung (1) umfasst, optional umfassend den Schritt des Vergießens der Anordnung (1) in einer Öffnung der Betonstruktur (80) und dann des Einsetzens des Rohrs (70) in die Öffnung durch die Anordnung (1).

13. Verfahren nach Anspruch 12, wobei das Verfahren den Schritt des Bohrens der Betonstruktur (80) zum Bilden der Öffnung, des Drückens der Anordnung (1) in die Öffnung und des Einsetzens des Rohrs (70) in die Anordnung (1) umfasst.

14. Verfahren nach Anspruch 12 oder 13, wobei das Verfahren den Schritt des Anpassens eine Abstandshalters (30) an die Elastomerhülse (10) vor dem Schritt des Integrierens der Anordnung (1) in die Öffnung in der Betonstruktur (80) umfasst, und optional die Schritte des Einsetzens von Buchsenmitteln (40) in die starre Ringkomponente (20) der Anordnung (1) oder in die Elastomerhülse (10) der Anordnung (1), und des Einsetzens von sekundären Buchsenmitteln in die Buchsenmittel (40).

15. Betonstruktur (80), umfassend eine Öffnung zum Aufnehmen eines Rohrs (70), wobei eine Anordnung (1) nach einem der Ansprüche 1 bis 11 in die Öffnung integriert ist.

## Revendications

1. Ensemble (1) de réception d'un conduit (70) latéral dans une ouverture formée dans une structure (80) en béton, l'ensemble (1) comprenant : un manchon (10) élastomère configuré pour être inséré de manière à pouvoir être retiré dans l'ouverture formée dans la structure (80) en béton, le manchon élastomère comprenant, à une première extrémité, une nervure (11) s'étendant vers l'intérieur et, à une deuxième extrémité, un rebord (13) s'étendant vers l'extérieur ; et un composant (20) annulaire rigide pouvant être inséré dans le manchon (10) élastomère, comprenant, à une première extrémité (21), une nervure (24) s'étendant vers l'intérieur,
**caractérisé en ce que** le composant (20) annulaire rigide comprend en outre, à une deuxième extrémité (22), un rebord (25) s'étendant vers l'extérieur.

2. Ensemble (1) suivant la revendication 1, dans lequel le manchon (10) élastomère est disposé de manière à chevaucher, en partie, une première extrémité (21) du composant (20) annulaire rigide.

3. Ensemble (1) suivant l'une quelconque des revendications précédentes, dans lequel la nervure (11) de la première extrémité du manchon (10) élastomère supporte le composant (20) annulaire rigide ou un conduit (70) inséré.

4. Ensemble (1) suivant l'une quelconque des revendications précédentes, dans lequel la première extrémité du manchon (10) élastomère est pourvue d'un renflement (15) extérieur.

5. Ensemble (1) suivant l'une quelconque des revendications précédentes, dans lequel le manchon (10) élastomère comprend une ou plusieurs conformations (16) faisant saillie vers l'intérieur pour retenir le composant (20) annulaire rigide dans le manchon (10) élastomère.

6. Ensemble (1) suivant l'une quelconque des revendications précédentes, dans lequel l'ensemble (1) comprend une pièce (30) d'écartement, dans lequel éventuellement la pièce (30) d'écartement est configurée pour coopérer avec une base prévue à la première extrémité du manchon (10) élastomère.

7. Ensemble (1) suivant l'une quelconque des revendications précédentes, dans lequel l'ensemble (1) comprend des moyens (40) de raccordement agencés pour s'adapter à l'intérieur du composant (20) annulaire rigide ou du manchon (10) élastomère, dans lequel éventuellement la surface intérieure du composant (20) annulaire rigide ou du manchon (10) élastomère est pourvue d'éléments de coopération avec des éléments correspondant sur les moyens (40) de raccordement.

8. Ensemble (1) suivant la revendication 7, dans lequel l'ensemble (1) comprend des moyens secondaires de raccordement agencés pour s'adapter à l'intérieur des moyens (40) de raccordement.

9. Ensemble (1) suivant l'une quelconque des revendications précédentes, dans lequel le manchon (10) élastomère comprend un épaulement (12) intérieur pouvant fonctionner pour supporter la deuxième extrémité (22) du composant (20) annulaire rigide, un conduit (70) ou des moyens (40) de raccordement, dans lequel éventuellement l'épaulement (12) intérieur du manchon (10) élastomère est prévu à ou vers la deuxième extrémité du manchon (10) élastomère.

10. Ensemble (1) suivant l'une quelconque des revendications précédentes, dans lequel le composant (20) annulaire rigide comprend un épaulement (26) intérieur pouvant fonctionner pour supporter un conduit (70) ou des moyens (40) de raccordement, dans lequel éventuellement l'épaulement (26) intérieur du composant (20) annulaire rigide est prévu à ou vers la deuxième extrémité (22) du composant (20) annulaire rigide.

11. Ensemble (1) suivant la revendication 10, lorsqu'elle dépend de la revendication 9, dans lequel le profil de l'épaulement (26) intérieur du composant (20) annulaire rigide est apparié au profil de l'épaulement (12) intérieur du manchon (10) élastomère.

12. Procédé d'insertion d'un conduit (70) dans une ouverture d'une structure (80) en béton, le procédé comprenant le stade d'intégration de l'ensemble (1) suivant l'une quelconque des revendications précédentes dans l'ouverture et d'insertion du conduit (70) dans l'ensemble (1), comprenant éventuellement le stade de couler l'ensemble (1) dans une ouverture de la structure (80) en béton, puis d'insérer le conduit (70) dans l'ouverture par l'ensemble (1) .

13. Procédé suivant la revendication 12, dans lequel le procédé comprend le stade de perçage de la structure (80) en béton pour former l'ouverture, de poussée de l'ensemble (1) dans l'ouverture et d'insertion du conduit (70) dans l'ensemble (1) .

14. Procédé suivant la revendication 12 ou 13, dans lequel le procédé comprend le stade d'adapter une pièce (30) d'écartement au manchon (10) élastomère avant le stade d'intégration de l'ensemble (1) dans l'ouverture de la structure (80) en béton, et éventuellement les stades d'insertion de moyens (40) de raccordement dans le composant (20) annulaire rigide de l'ensemble ou dans le manchon (10) élastomère de l'ensemble (1), et l'insertion de moyens secondaires de raccordement dans les moyens (40) de raccordement.

15. Structure (80) en béton comprenant une ouverture de réception d'un conduit (70), dans laquelle un ensemble (1) suivant l'une quelconque des revendications 1 à 11 est intégré dans ladite ouverture.
